# EUROPÄISCHE PATENTSCHRIFT

(11) **EP 1 466 318 B1**
(45) Veröffentlichungstag und Bekanntmachung des Hinweises auf die Patenterteilung: **30.08.2006**
(21) Anmeldenummer: 03729416.2
(22) Anmeldetag: 02.01.2003
(51) Int. Cl.: G10L 15/26

(54) **SPRACHERKENNER UND BETRIEBSVERFAHREN FÜR EINEN SOLCHEN**
LANGUAGE RECOGNIZER AND OPERATING METHOD THEREFOR
SYSTEME DE RECONNAISSANCE VOCALE ET SON PROCEDE D'EXPLOITATION

(30) Priorität: 17.01.2002 EP 02001255
(43) Veröffentlichungstag der Anmeldung: 13.10.2004
(73) Patentinhaber: SIEMENS AKTIENGESELLSCHAFT, 80333 München (DE)
(72) Erfinder: MAJOR, Andreas Ralph, 85238 Petershausen (DE); WANDINGER, Michael, 81829 München (DE)
(86) Internationale Anmeldenummer: PCT/EP2003/000005
(87) Internationale Veröffentlichungsnummer: WO 2003/060879

(56) Entgegenhaltungen:
- EP-A- 0 984 354
- US-A- 5 873 064
- US-A- 5 890 122
- US-B1- 6 233 559
- US-B1- 6 243 680
- "EASY NAVIGATE TASK LIST BY VOICE" IBM TECHNICAL DISCLOSURE BULLETIN, IBM CORP. NEW YORK, US, Bd. 40, Nr. 5, 1. Mai 1997 (1997-05-01), Seite 81 XP000723579 ISSN: 0018-8689

## Beschreibung

Die Erfindung betrifft einen Spracherkenner nach dem Oberbegriff des Anspruchs 1 sowie ein Betriebsverfahren für einen solchen.

Nachdem sich die Spracherkennung bei der Texteingabe in auf PCs laufenden Büroapplikationen seit Jahren ein festes und stetig wachsendes Anwendungsgebiet gesichert hat, dringt sie zunehmend auch in die Steuerung technischer Geräte ein. Sowohl bei hochgradig miniaturisierten und zugleich computerisierten handgehaltenen elektronischen Geräten - insbesondere Mobiltelefonen und PDAs - als auch bei technischen Geräten, deren Bedienung möglichst wenig Aufmerksamkeit und Konzentration des Bedieners binden sollen - wie der verschiedenen technischen Geräte in einem fahrenden Auto - kann diese Art der Spracherkennung, mit darauf aufbauender Sprachsteuerung, sinnvolle Einsatzmöglichkeiten finden. Bei der erstgenannten Art von Geräten ist nämlich die für Bedienvorgänge verfügbare Fläche so klein geworden, daß sich die Vielzahl möglicher Funktionen durch herkömmliche Tastatur- oder TouchScreen-Eingaben nur noch sehr unbequem (und für Personen mit schlechtem Sehvermögen nahezu überhaupt nicht mehr) realisieren läßt. Bei Einsatzfeldern, in denen die Aufmerksamkeit des Benutzers auf andere Dinge (z. B. den Straßenverkehr) gerichtet bleiben muß, erbringt die Einführung der Sprachsteuerung neben der Komfortsteigerung auch einen wesentlichen Sicherheitszuwachs.

In der Spracherkennung wird ein Lexikon mit den zu erkennenden Wörtern benötigt. Diese werden im Falle der phonembasierten Spracherkennung mittels einem Text-to-Phonem-Verfahren in eine phonetische Umschrift überführt und im Vokabular abgelegt. Während des Erkennungsvorgangs erfolgt im sogenannten Viterbi-Algorithmus eine Suche nach dem besten Pfad durch die im Vokabular enthaltenen Phonemfolgen. Einzelheiten zu den etablierten Spracherkennungsalgorithmen finden sich in der einschlägigen Fachliteratur.

Weitgehend computerisierte technische Geräte der oben angesprochenen Art (PDAs, Handheld-PCs, Mobiltelefone, Kfz-Audioanlagen, Kfz-Borcomputer etc.) haben vielfach an PC-Bedienoberflächen angelehnte Strukturen der Benutzerschnittstellen bzw. MMIs. Es ist eine Mehrzahl von Applikationen installiert, die auf geeignete Weise - und bei komplexeren Geräten auch in einer bestimmten, logischen hierarchischen Unterordnung - angesteuert werden müssen. Bei herkömmlichen Geräten dieser Art wird hierzu eine Menüsteuerung angeboten, die vom Benutzer durch Softkey-Eingaben ausgeführt wird.

Bei der Applikationswahl per Spracheingabe befinden sich im Lexikon die Programmnamen der verfügbaren Applikationen. Nach der Erkennung eines Namens wird das jeweilige Programm ausgeführt bzw. die Applikation gestartet. Dazu müssen die Programmnamen und die Programmpfade in einem geeigneten Format abgespeichert sein.

Gemäß dem Stand der Technik werden die einzelnen Programmnamen mit den entsprechenden Erkennungsresultaten (den Worten des Lexikons) fest verdrahtet. Dies kann einerseits in einer zusätzlichen Datei festgelegt werden oder andererseits fest im Quellcode des Programms definiert sein. Beide Methoden haben entscheidende Nachteile, welche im folgenden beschrieben werden:
- Beim Arbeiten mit einer zusätzlichen Datei besteht das Problem, daß diese von einem Benutzer einsehbar ist und demzufolge auch verändert werden kann. Auch binäre Formate oder schreibgeschützte Dateien bieten keinen wirksamen Schutz vor Veränderungen. Dadurch können Diskrepanzen zwischen dem verwendeten Vokabular und der Wortliste bzw. Programmliste entstehen. Dies hat auch zur Folge, daß die Applikation möglicherweise falsch reagiert.
- Bei der Festlegung der als Steuerbefehle wirkenden sprachlichen Äußerungen im Quellcode kann das Vokabular auf einfachem Wege nicht weiter geändert werden. Es müßte der Quellcode jedes Mal neu übersetzt und ausgeliefert werden, sobald Änderungen der Programmnamen auftreten.
- Der entscheidende Nachteil des bisherigen Vorgehens liegt in der fehlenden bzw. unzureichenden Erweiterbarkeit des Systems. Bisher ist es dem Benutzer nicht möglich, seine eigenen Kommandos oder Anwendungen in die automatische Spracherkennung mit aufzunehmen - jedenfalls nicht ohne die Gefahr einer Störung der ursprünglich programmierten Konfiguration des Spracherkenners.

Ein Spracherkenner nach dem Oberbegriff des Anspruchs 1 ist aus US-B-6243680 oder US-A-5873064 bekannt.

Der Erfindung liegt die Aufgabe der Bereitstellung eines verbesserten Spracherkenners und Verfahrens zum Betrieb eines solchen zugrunde, mit denen dieser zur Berücksichtigung von eigenen Steuerbefehlen oder Anwendungen des Nutzers flexibler konfiguriert werden kann.

Diese Aufgabe wird in ihrem Vorrichtungsaspekt durch einen Spracherkenner mit den Merkmalen des Anspruchs 1 und in ihrem Verfahrensaspekt durch ein Betriebsverfahren mit den Merkmalen des Anspruchs 4 gelöst.

Die Erfindung schließt den grundlegenden Gedanken ein, zur Sprachsteuerung von Applikationen - bzw. zu einer entsprechenden Handhabung von Dateien - eine mit Links aufgebaute Benutzeroberfläche bereitzustellen. Das Organisationsprinzip der Links ermöglicht ohne weiteres einen strukturierten Aufruf von Programmen bzw. Dateien in unterschiedlichen Hierarchieebenen, ohne daß a priori eine starre Zuordnung definiert und programmiert werden muß.

Die Liste der zu erkennenden Wörter (das Lexikon) wird durch den Inhalt eines bestimmten Dateiverzeichnisses bestimmt, in welchem Links (Verknüpfungen) zu den vorhandenen Programmen bzw. Dateien enthalten sind. Der Name des Links gibt das zu erkennende Wort an, und das Programm bzw. die Datei, auf die dieser Link zeigt, gibt die auszuführende Aktion an. Bei der Umsetzung des Namens sollte darauf geachtet werden, daß nur der Teilstring vor dem ersten Punkt als Kommando verwendet wird. Beim Start des Erkennerprogramms wird das Vokabular erzeugt. So kann flexibel auf Änderungen der Applikations- bzw. Dateistruktur reagiert werden. Sobald ein Wort erkannt wird, wird der entsprechende Link aktiviert und die gewünschte Aktion ausgeführt.

Vorteile gegenüber dem bisherigen Verfahren sind in der Flexibilität, was Worte und Aktionen betrifft, und der einfachen Erstellung und Veränderung eines komplexen Erkennerwortschatzes zu sehen. Das Hinzufügen von neuen Kommandos zum bisherigen Wortschatz kann einfach und in gewohnter Weise durchgeführt werden. Im Dateiverzeichnis muß lediglich eine Verknüpfung zum gewünschten Programm oder der Datei erstellt werden. Unter Windows z. B. ist das Erstellen eins Links einfach über das Kontextmenü möglich.

Damit wird ein weitere Vorteil klar: Da das Filesystem die Verwaltung von Kommandos und Aktionen (Name und Ziel der Verknüpfung) übernimmt, ist kein zusätzliches Programm zur Verwaltung des Wortschatzes nötig. Soll ein Kommando gelöscht werden, wird einfach der Link gelöscht.

Da moderne Betriebssysteme auch Links auf Dateien erlauben, können Dokumente ebenfalls per Sprachkommando geöffnet werden.

In einer bevorzugten Ausführung umfaßt das Dateiverzeichnis eine Mehrzahl von Unterverzeichnissen in mindestens einer untergeordneten Hierarchieebene, wobei die Verzeichnisnamen ein erstes und gegebenenfalls weitere, hierarchisch untergeordnete aktive Teilvokabulare des Spracherkenners bilden.

Durch die Verwendung von Unterverzeichnissen im Dateiverzeichnis lassen sich auf einfachste Weise strukturierte Sprachaufrufe von Programmen und Dateien erzeugen. So können z. B. alle Links zu Musikstücken in ein Unterverzeichnis "Musik" abgelegt werden. In der ersten Stufe der Erkennung befindet sich das Wort "Musik" im aktiven Vokabular. Wird dieses erkannt, wird das Vokabular gewechselt (z. B. per Language Model), die im Unterverzeichnis "Musik" enthaltenen Links stehen nun im aktiven Vokabular.

Insbesondere ist jedem Programm bzw. jeder Datei aus einem Unterverzeichnis ein zusammenhängender, mehrgliedriger Sprachbefehl zugeordnet, der die Namen der zu dem Programm bzw. der Datei führenden Links des Dateiverzeichnisses und jedes nachgeordneten Unterverzeichnisses umfaßt.

Mit dieser Methode lassen sich in einfachster Weise komplexe Sprachkommandos erstellen und editieren. Vorhandene Verzeichnisse mit Verknüpfungen, wie z. B. das Windows Startmenü, lassen sich nun einfach per Sprachsteuerung bedienen, da schon alle nötigen Informationen vorhanden sind.

Dieses Verfahren ist eine Weiterentwicklung von Verknüpfungen mit Programmen (Beispiel Windows PC) und den festverdrahteten Spracherkennerressourcen. Hierbei wird durch Anlegen eines Links automatisch die Erkennerressource erstellt. D. h. danach kann sofort der Name des Links durch den Erkenner verarbeitet werden.

Generell können beliebige Dateien und Programme, nachdem sie in das spezielle Verzeichnis kopiert wurden, per Sprachbefehl gestartet werden. Es ist also egal, ob es sich um einen Musiktitel, eine c++Datei, ein Textdokument oder um ein Programm handelt. Durch das Abspeichern eines Links in dem speziellen Verzeichnis wird die Datei durch das eingestellte Defaultprogramm geöffnet. Beispiel: Ein Dokument mit der Endung .doc wird automatisch mit dem Programm Word geöffnet (wie beim Doppelklick mit der Maus auf die Datei bei einer herkömmlichen PC-Eingabe).

Die oben erläuterten Aspekte der Erfindung stellen sich sowohl als Vorrichtungsaspekt eines Spracherkenners wie auch als Aspekte des Betriebsverfahrens eines solchen dar - zumal die Realisierung typischerweise in einer geeigneten Mischung aus Hard- und Softwarekomponenten erfolgen wird.

Nachfolgend sind zwei Arten, ein Wort in das Erkennerlexikon aufzunehmen, genannt:
(1) Aufnahme durch einen Programmaufruf über das Kontextmenü für die gewünschte Anwendung. Hierbei enthält das Kontextmenü zwei Programmaufrufe (Add und Remove). Add fügt das entsprechende Programm/die Datei hinzu und Remove zeigt die Liste der Programme/Dateien an, welche aktuell durch Sprachwahl ausgewählt werden können.
(2) Kopieren des Link der gewünschten Anwendung in den speziellen Ordner über "drag'n'drop". Hierbei muß, um ein Programm zu entfernen, in das entsprechende Verzeichnis gewechselt und der gewünschte Link durch "Entfernen" aus dem Verzeichnis gelöscht werden.

Die Ausführung der Erfindung, wie in den unabhängigen Ansprüchen definiert, ist nicht auf die oben beschriebenen Beispiele und Aspekte beschränkt, sondern ebenso in einer Vielzahl von Abwandlungen möglich, die im Rahmen fachgemäßen Handelns liegen.

## Patentansprüche

1. Spracherkenner mit einem gespeicherten Vokabular von zu erkennenden Wörtern zur Sprachsteuerung einer Mehrzahl von Programmen und/oder sonstigen Dateien, denen jeweils ein Wort des Vokabulars als Name zugeordnet ist, wobei in einem Dateiverzeichnis zu jedem Programm bzw. jeder Datei ein durch einen Sprachbefehl gebildeter Link gespeichert ist, wobei die Namen der Links ein erstes aktives Teilvokabular des Spracherkenners bilden,
**dadurch gekennzeichnet, daß**
das Dateiverzeichnis eine Mehrzahl von Unterverzeichnissen in mindestens einer untergeordneten Hierarchieebene umfaßt, wobei die Namen der Unterverzeichnisse zusammen mit denen der Links ein erstes und gegebenenfalls weitere, hierarchisch untergeordnete aktive Teilvokabulare des Spracherkenners bilden und jedem Programm bzw. jeder Datei aus einem Unterverzeichnis ein zusammenhängender, mehrgliedriger Sprachbefehl zugeordnet ist, der die Namen der zu dem Programm bzw. der Datei führenden Links des Dateiverzeichnisses und jedes nachgeordneten Unterverzeichnisses umfaßt.

2. Spracherkenner nach Anspruch 1,
**dadurch gekennzeichnet, daß**
die Links Verknüpfungen zu Applikationsprogrammen definieren.

3. Spracherkenner nach Anspruch 1,
**dadurch gekennzeichnet, daß**
die Links Verknüpfungen zu Dokumenten, insbesondere Textdokumenten oder Sprach-, Musik- oder Videodateien, definieren.

4. Betriebsverfahren für einen Spracherkenner nach einem der vorangehenden Ansprüche,
**dadurch gekennzeichnet, daß**
beim Start des Spracherkennerprogramms das aktuelle Vokabular erzeugt wird, welches wenigstens die Namen der Links des Dateiverzeichnisses umfasst und zur Editierung zusammenhängender, mehrgliedriger Sprachbefehle unter dem Dateiverzeichnis Unterverzeichnisse in mindestens einer untergeordneten Hierarchieebene angelegt werden und die Erkennung zusammenhängender, mehrgliedriger Sprachbefehle in einem mehrstufigen Erkennungsvorgang erfolgt, in dessen Ablauf von einem ersten in ein zweites und gegebenenfalls weitere aktive Teilvokabulare gewechselt wird.

5. Betriebsverfahren nach Anspruch 4,
**dadurch gekennzeichnet, daß**
die Administrierung des Vokabulars als Verwaltung des Dateiverzeichnisses und optional vorhandener Unterverzeichnisse, ohne zusätzliches Vokabular-Verwaltungsprogramm, erfolgt.

6. Betriebsverfahren nach einem der Ansprüche 4 oder 5,
**dadurch gekennzeichnet, daß**
die Aufnahme neuer Worte in das Vokabular oder die Entfernung von Worten aus dem Vokabular durch einen Programmaufruf über ein an sich bekanntes Kontextmenü für das betreffende Programm bzw. die betreffende Datei oder durch einen "drag'n'drop"-Ablauf erfolgt.

## Claims

1. Voice recogniser having a stored vocabulary of words that are to be recognised for voice control of a plurality of programs and/or other files, to each of which is assigned a word of the vocabulary as name, with a link to each program or file being saved in a file directory, the names of the links forming a first active partial vocabulary of the voice recogniser,
**characterised in that**
the file directory contains a plurality of sub-directories on at least one subordinate hierarchy level, the names of the sub-directories together with those of the links forming a first and, where applicable, further hierarchically subordinate active partial vocabularies of the voice recogniser and each program or file being assigned from a sub-directory a voice command composed of multiple connected parts that contains the names of the links from the file directory and each subordinate sub-directory leading to the program or file.

2. Voice recogniser according to claim 1,
**characterised in that**
the links define shortcuts to application programs.

3. Voice recogniser according to claim 1,
**characterised in that**
the links define shortcuts to documents, in particular text documents or voice, music or video files.

4. Operating method for a voice recogniser according to one of the preceding claims,
**characterised in that**
when the voice recogniser program is started the current vocabulary containing at least the names of the links from the file directory is generated and in order to edit voice commands composed of multiple connected parts, sub-directories are created below the file directory on at least one subordinate hierarchy level, and voice commands composed of multiple connected parts are recognised in a multi-stage recognition process in the course of which a switch is made from a first into a second active partial vocabulary and, where applicable, further active partial vocabularies.

5. Operating method according to claim 4,
**characterised in that**
the administration of the vocabulary is effected as management of the file directory and optionally present sub-directories without an additional vocabulary management program.

6. Operating method according to one of the claim 4 or 5,
**characterised in that**
new words are added to the vocabulary or words are removed from the vocabulary by means of a program call via a context menu for the relevant program or file known per se or by means of a "drag'n'drop" procedure.

## Revendications

1. Identificateur vocal comprenant un vocabulaire mémorisé de mots à reconnaître pour la commande vocale d'une pluralité de programmes et/ou d'autres fichiers, auxquels un mot du vocabulaire est respectivement affecté comme nom, un lien formé par une instruction vocale étant mémorisé dans un répertoire de fichiers pour chaque programme resp. chaque fichier, les noms des liens formant un premier vocabulaire partiel actif de l'identificateur vocal,
**caractérisé en ce que**
le répertoire de fichiers comprend une pluralité de sous-répertoires dans au moins un niveau hiérarchique inférieur, les noms des sous-répertoires formant, avec ceux des liens, un premier vocabulaire partiel et, le cas échéant, d'autres vocabulaires partiels actifs, hiérarchiquement inférieurs, de l'identificateur vocal, et une instruction vocale cohérente à plusieurs termes étant affectée à chaque programme resp. à chaque fichier à partir d'un sous-répertoire, cette instruction comprenant les noms des liens du répertoire de fichiers, menant au programme resp. au fichier, ainsi que chaque sous-répertoire inférieur.

2. Identificateur vocal selon la revendication 1,
**caractérisé en ce que**
les liens définissent des mises en relation avec des programmes d'application.

3. Identificateur vocal selon la revendication 1,
**caractérisé en ce que**
les liens définissent des mises en relations avec des documents, notamment des documents de texte ou des fichiers vocaux, des fichiers musicaux ou des fichiers vidéo.

4. Procédé d'exploitation d'un identificateur vocal selon l'une quelconque des revendications précédentes,
**caractérisé en ce que**
au démarrage du programme de l'identificateur vocal, le vocabulaire actuel est généré, lequel comprend au moins les noms des liens du répertoire de fichiers, et **en ce que**, pour éditer des instructions vocales cohérentes à plusieurs termes, en dessous du répertoire de fichiers, des sous-répertoires sont créés dans au moins un niveau hiérarchique inférieur et
**en ce que** la reconnaissance d'instructions vocales cohérentes à plusieurs termes est réalisée dans une opération de reconnaissance à plusieurs étapes, au cours de laquelle on passe d'un premier vocabulaire partiel actif à un deuxième vocabulaire partiel actif et éventuellement à d'autres vocabulaires partiels actifs.

5. Procédé d'exploitation selon la revendication 4,
**caractérisé en ce que**
l'administration du vocabulaire est réalisée comme gestion du répertoire de fichiers et de sous-répertoires disponibles optionnellement, sans programme supplémentaire de gestion de vocabulaire.

6. Procédé d'exploitation selon la revendication 4 ou 5,
**caractérisé en ce que**
l'enregistrement de nouveaux mots dans le vocabulaire ou la suppression de mots du vocabulaire est réalisée au moyen d'un appel de programme par le biais d'un menu de contexte connu en soi pour le programme concerné resp. le fichier concerné ou au moyen d'une opération « drag'n'drop ».
